# EUROPEAN PATENT SPECIFICATION

(11) **EP 1 598 164 B1**
(45) Date of publication and mention of the grant of the patent: **16.05.2007**
(21) Application number: 05009062.0
(22) Date of filing: 26.04.2005
(51) Int. Cl.: B29B 17/00, C04B 16/08, C04B 18/20, C08J 11/06, B09B 3/00, C04B 28/00

(54) **Polymeric foam extrusion process**
Verfahren zur Kunststoffschaumherstellung
Procédé pour l'extrusion d'une mousse polymérisée

(30) Priority: 21.05.2004 IT BA20040025
(43) Date of publication of application: 23.11.2005
(73) Proprietor: CONSORZIO CETMA, 72100 Brindisi (IT)
(72) Inventor: Maffezzoli, Alfonso, Lecce (IT); Marseglia, Alessandro, Mesagne (BR) (IT); Greco, Antonio, Lecce (IT); Manni, Orazio, Maglie (IT); Barone, Luigi, Lecce (IT)

(56) References cited:
- EP-A- 0 554 705
- EP-A- 0 924 173
- WO-A-98/50318
- WO-A-20/04022503
- WO-A-20/04024793
- AT-B- 391 862
- DE-A1- 1 471 451
- DE-A1- 4 320 852
- US-A- 5 352 390
- US-A- 5 622 556
- US-A1- 2002 050 233
- US-A1- 2003 109 592
- PATENT ABSTRACTS OF JAPAN vol. 2000, no. 01, 31 January 2000 (2000-01-31) & JP 11 292589 A (JAPAN HIGHWAY PUBLIC CORP; MARUMAN CORPORATION KK), 26 October 1999 (1999-10-26)

## Description

### Technical field

The present invention relates to the extrusion process of polymeric foams with controlled density and granulometry, by using post-consumer or recycled heterogeneous plastic as a raw material, as, for example, polyolefines coming from the recycling of solid urban or industrial waste. These foams can be added to concrete instead of expanded clay or Polystyrene or other limestone inert materials.

Examples of applications of other concrete fillers based polymers and polymer foams can be found in the following patents/patent applications: US 5,622,556 describes micronized polystyrene particles used as weight saving component for an improved lightweight cementitious product; US 2006/0020048 discloses a concrete containing polyurethane powder; US 5,352,390 mentions a fireproofing compositions comprising a hydratable cementitious binder and polystyrene aggregate; finally, EP 0 924 173 discloses an expanded polystyrene beads for use as a substitute of concrete to make lightweight concrete.

The major drawback of the known applications is that the product obtained cannot be used as building structural element, because the properties are compromised by complex mixture formulation and dosage. The high entrapment of air during the mixing operation, due to the crushed shape of the polymeric flakes and to the kind of the polymer, also creates a remarkable porosity, that causes the short lifetime of the product. In addition, poor mechanical properties can arise from poor properties of light polymer fillers.

### Disclosure of the invention

The present invention as defined in claims 1 and 8 solves the above mentioned problems being an extrusion process of polymeric foams with controlled density and granulometry; such foams can be added to cement to create concrete to be used for different purposes, as, for example, building and/or high insulating material. The invention makes use of heterogeneous plastic as a raw material, such as polyolefines, both washed or not, coming from the waste differentiate collection (for example, solid urban or industrial waste).

According to the invention, is the use of a foamed chemical agent, bi-hydrate calcium sulphate (known as gypsum), which is also a waste material, a by-product of smoke treatment of power plants. It is produced in large quantities thanks to the removal of Sulphuric and Sulphurous anhydride produced during the combustion of solid and liquid fuels containing Sulphur. These and other advantages will be pointed out in the detailed description of the invention that will refer to a preferred way of carrying out.

### Way of carrying out the invention

Subject-matter of the invention, as defined in claims 1 and 8, is a process to obtain a polymeric foam with controlled density and granulometry, which, according to the needs, can be added to the cement to produce concretes, to be used for different purposes, as, for example, building and/or high insulating material. Infact, the lenticular shape of the expanded polymer allows to remarkably reduce the air entrapment and, as a result, to increase the concrete lifetime. Each component of the plastic mixture can be substituted, in part or as a whole, by the corresponding virgin polymer. The heterogeneous polymer expansion is realized by means of a chemical agent, bi-hydrate calcium sulphate (commonly known as "gypsum"), never used before for this purpose, which produces only steam as a dissociation gas with a better environmental impact with respect to other known chemical expansion agents. The bi-hydrate calcium sulphate is a waste material deriving from the treatment of power plants smoke (also carbon ones) and, therefore, is available in a large quantities and free of charge.

According to a preferred solution, a crosslinking agent is to be used, to increase the melt strength of the fused polymer to avoid the polymer collapse under the gas pressure produced by the dissociation of the expanding agent.

The desired characteristics of the polymeric foam, density and granulometry, are obtained by optimizing the following parameters:
■ Temperatures of the extrusion cylinder and die;
■ Rotating speed of the extrusion screw;
■ Gypsum weight percent;
■ Plastic mixture viscosity, by using a crosslinking agent;
■ Extrusion die geometry.

Several formulas, optimized with different density range (air to cement ratio, paste volume), have been developed to obtain the best possible properties of the final product; with respect to the known concretes additivated with not-expanded heterogeneous plastic, this new product shows:
1. lower specific weight;
2. better specific mechanical properties (referred to density);
3. lower cost;
4. lower environmental impact;
5. improved thermal and acoustic insulating properties;
6. lower air entrapment and, therefore, higher lifetime.
be used to facilitate the mixture of the raw materials and to obtain a good fluidity of the final product; also known surfactants can be used to improve the interface between polymeric aggregate and cement paste.

## Claims

1. Extrusion process to obtain polymeric foams with controlled density and granulometry, by using heterogeneous recycled plastic as a raw material; said foams can be added to cement to create concrete to be used for different purposes, like building and/or high insulating material; said heterogeneous recycled plastic, for example polyolefines, both washed or not, comes from the waste differentiate collection, for example, solid urban or industrial waste; said process **characterized in that** the heterogeneous polymer expansion is realized by a chemical agent, bi-hydrate calcium sulphate, which produces only steam as a dissociation gas, and said expanding agent is a waste material derived from the treatment of power plant smoke.

2. Process according to claim 1, wherein each component of the recycled plastic can be substituted, in part or as a whole, by the corresponding virgin polymer.

3. Process according to claim 1 or 2, **characterized by** the use of a crosslinking agent, to improve the melt strength of the fused polymer.

4. Process according to one of the previous claims, which allows to modify the density of the polymeric foams and the granulometry of the light aggregates, being **characterized by** the optimization of the following parameters: temperatures of extrusion cylinder and die, rotating speed of the extrusion screw, gypsum weight amount, plastic mixture viscosity, extrusion die geometry.

5. Process to obtain concrete with expanded heterogeneous plastic aggregate, **characterized by** the fact that said plastic aggregate is obtained by the procedure according to one of the previous claims.

6. Process according to claim 5, **characterized by** the use of an acrylic superfluidifier to facilitate the mixture of the raw materials and to obtain a good fluidity of the final product.

7. Process according to claim 5 or 6, **characterized by** the use of surfactants to improve the interface between the polymeric aggregate and the cement paste.

8. Concretes with expanded heterogeneous plastic aggregate, **characterized by** the fact that said plastic aggregate is obtained by the process according to one of the claims from 1 to 4.

## Patentansprüche

1. Extrusionsverfahren zum Erhalt von Polymerschäumen mit gesteuerter Dichte und Granulometrie, durch Benutzen von heterogenem recyceltem Kunststoff als ein Rohmaterial; wobei die Schäume zu Zement hinzugegeben werden können, um Beton zu erzeugen, der für verschiedene Zwecke wie Baumaterial und/oder hochisolierendes Material benutzt werden soll; wobei der heterogene recycelte Kunststoff, zum Beispiel Polyolefine, sowohl gewaschen als auch nicht, aus der Mülltrennsammlung, zum Beispiel aus städtischem oder industriellem Müll kommt; wobei das Verfahren **dadurch gekennzeichnet ist, dass** die heterogene Polymerausdehnung durch ein chemisches Mittel Bi-hydrat-Kalziumsulfat ausgeführt wird, das nur Dampf als ein Dissoziationsgas erzeugt, und wobei das Ausdehnungsmittel ein Müllmaterial ist, das aus der Behandlung von Kraftwerkrauch abgeleitet ist.

2. Verfahren nach Anspruch 1, wobei jeder Bestandteil des recycelten Kunststoffs teilweise oder vollständig durch das entsprechende reine Polymer substituiert werden kann.

3. Verfahren nach Anspruch 1 oder 2, **gekennzeichnet durch** die Benutzung eines Vernetzungsmittels, um die Schmelzkraft des geschmolzenen Polymers zu verbessern.

4. Verfahren nach einem der vorherigen Ansprüche, das die Modifizierung der Dichte der Polymerschäume und der Granulometrie der Lichtaggregate ermöglicht und durch die Optimierung der folgenden Parameter **gekennzeichnet** ist: Temperaturen von Extrusionszylinder und -düse, Drehgeschwindigkeit der Extrusionsschnecke, Gipsgewichtsanteil, Viskosität der Kunststoffmischung, Geometrie der Extrusionsdüse.

5. Verfahren zum Erhalt von Beton mit ausgedehntem heterogenen Kunststoffaggregat, **gekennzeichnet durch** die Tatsache, dass das Kunststoffaggregat **durch** das Verfahren nach einem der vorherigen Ansprüche erhalten wird.

6. Verfahren nach Anspruch 5, **gekennzeichnet durch** die Benutzung eines acrylhaltigen Superverflüssigers, um die Mischung der Rohmaterialien zu ermöglichen und eine gute Fließfähigkeit des Endprodukts zu erreichen.

7. Verfahren nach Anspruch 5 oder 6, **gekennzeichnet durch** die Benutzung von Tensiden, um die Grenzfläche zwischen dem Polymeraggregat und der Zementpaste zu verbessern.

8. Betons mit ausgedehntem heterogenen Kunststoffaggregat, **gekennzeichnet durch** die Tatsache, dass das Kunststoffaggregat **durch** das Verfahren nach einem der Ansprüche 1 bis 4 erhalten wird.

## Revendications

1. Processus d'extrusion pour obtenir des mousses polymères avec une densité et une granulométrie contrôlées, en utilisant du plastique recyclé hétérogène comme matière brute ; lesdites mousses peuvent être ajoutées à du ciment pour créer du béton à utiliser à diverses fins, telles qu'un matériau de construction et/ou hautement isolant ; ledit plastique recyclé hétérogène, par exemple des polyoléfines, lavées ou non, provient de la collecte sélective des déchets, par exemple, des ordures ménagères ou des déchets industriels solides ; ledit processus étant **caractérisé en ce que** l'expansion de polymère hétérogène est réalisée par un agent chimique, du sulfate de calcium bihydraté, qui produit uniquement de la vapeur comme gaz de dissociation, et ledit agent expansif est un matériau de récupération dérivé du traitement de la fumée de centrales électriques.

2. Processus selon la revendication 1, dans lequel chaque composant de plastique recyclé peut être substitué, en partie ou dans sa totalité, par le polymère vierge correspondant.

3. Processus selon la revendication 1 ou la revendication 2, **caractérisé par** l'utilisation d'un agent de réticulation, pour améliorer la résistance à la fusion du polymère condensé.

4. Processus selon l'une quelconque des revendications précédentes, qui permet de modifier la densité des mousses polymères et la granulométrie des agrégats légers, étant **caractérisé par** l'optimisation des paramètres suivants : températures du cylindre et de la matrice à extrusion, vitesse de rotation de la vis d'extrusion, quantité pondérale de gypse, viscosité du mélange de plastique, géométrie de la matrice d'extrusion.

5. Processus pour obtenir du béton avec un agrégat de plastique hétérogène expansé, **caractérisé par le fait que** ledit agrégat de plastique est obtenu par la procédure selon l'une des revendications précédentes.

6. Processus selon la revendication 5, **caractérisé par** l'utilisation d'un superfluidifiant acrylique pour faciliter le mélange des matières brutes et pour obtenir une bonne fluidité du produit final.

7. Processus selon la revendication 5 ou la revendication 6, **caractérisé par** l'utilisation de tensioactifs pour améliorer l'interface entre l'agrégat polymère et la pâte de ciment.

8. Bétons avec un agrégat plastique hétérogène expansé, **caractérisé par le fait que** ledit agrégat plastique est obtenu par le processus selon l'une quelconque des revendications 1 à 4.
